# EUROPEAN PATENT APPLICATION

(11) **EP 1 696 392 A2**
(43) Date of publication of application: **30.08.2006**
(21) Application number: 05027115.4
(22) Date of filing: 12.12.2005
(51) Int. Cl.: G07C 5/08, G07C 9/00

(54) **Starter key of construction equipment and maintenance system of construction equipment using the same**

(30) Priority: 23.02.2005 KR 2005015021
(71) Applicant: Volvo Construction Equipment Holding Sweden AB, 631 85 Eskilstuna (SE)
(72) Inventor: Kang, Ho Jin, Changwon Kyungsangnam-do (KR)
(74) Representative: Weitzel, Wolfgang

(57) **Abstract**

A starter key is used in a construction equipment provided with an electronic control unit (ECU) having a maintenance monitoring function and a connection interface for a wire/wireless data input/output between the ECU and an external storage device. The starter key includes a key body for being inserted into a key hole provided in the construction equipment, and a key case, connected to the connection interface of the construction equipment, for being capable of performing a data communication with the ECU and storing data transmitted from the ECU. The maintenance data of the construction equipment stored in the starter key is used for the maintenance of the construction equipment, and thus the efficiency of the construction equipment maintenance is maximized.

## Description

### BACKGROUND OF THE INVENTION

### Field of the invention

The present invention relates to a maintenance system using a starter key of construction equipment, and more particularly to a starter key of construction equipment and a maintenance system of construction equipment using the same which can diagnose the construction equipment by storing data generated from the construction equipment in the starter key of the construction equipment that can perform data communication with an ECU (Electronic Control Unit) of the construction equipment and a personal computer and by analyzing the stored data offline and online.

### Description of the Prior Art

Recently, it is general to use an ECU (Electronic Control Unit) in operation equipment for construction (hereinafter referred to as "construction equipment"), such as an oil hydraulic shovel, in order to offer convenience in operation, precise control, and stability insurance of the construction equipment.

In addition, the recent construction equipment is provided with a machine display unit (MDU) for displaying the status of the construction equipment to an operator on the basis of sensed values of respective driving parts inputted to the ECU.

Since the operator can operate the construction equipment in a convenient and safe working environment as the number of ECUs is larger, the number of ECUs provided in the construction equipment is on an increasing trend day by day.

Also, the recent construction equipment is provided with equipment for diagnosing the construction equipment that is connected to the construction equipment so as to quickly diagnose and repair a trouble part.

According to a conventional maintenance system of construction equipment, a service man in charge, who is visiting the spot, checks the construction equipment using a diagnosis device such as a personal computer that is connectable to an ECU of the construction equipment, judges whether a corresponding component is in an abnormal state by checking the component using various kinds of sensor equipment, and replaces or repairs the corresponding component if the component is in an abnormal state.

However, if the replacement of the corresponding component is determined according to the conventional maintenance system of construction equipment, the user should check the status of stock of the corresponding component, and replace the component by re-visiting the spot in consideration of the delivery time of the component. This causes waste of much time and large cost.

In order to solve these problems, schemes for minimizing the corresponding service period by securing the status of the equipment and the trouble diagnosis data using a commercial wireless communication device (e.g., a low-orbit satellite or portable phone) have recently been proposed.

However, although there is no problem in using the commercial wireless communication service in the case where the construction equipment operates in suburban areas, it is difficult to provide a smooth communication service due to communication errors since the construction equipment mostly operates in a valley of a mountainous area (e.g., in the case of an excavator, it performs an excavation work in a mountain valley) that is far apart from downtown areas. In addition, the commercial wireless communication service requires great expenses.

### SUMMARY OF THE INVENTION

Accordingly, the present invention has been made to solve the above-mentioned problems occurring in the prior art, and an object of the present invention is to provide a starter key of construction equipment and a maintenance system of construction equipment using the same which can perform a wire/wireless communication with construction equipment and a personal computer and store data received from the construction equipment and the personal computer.

In order to accomplish this object, there is provided a starter key of construction equipment for use in the construction equipment provided with an electronic control unit (ECU) having a maintenance monitoring function and a connection interface for a wire/wireless data input/output between the ECU and an external storage device, according to an embodiment of the present invention, which includes a key body for being inserted into a key hole provided in the construction equipment; and a key case, connected to the connection interface of the construction equipment, for being capable of performing a data communication with the ECU and storing data transmitted from the ECU.

In another aspect of the present invention, there is provided a maintenance system of construction equipment using a starter key of the construction equipment for use in the construction equipment provided with an electronic control unit (ECU) having a maintenance monitoring function and a connection interface for a wire/wireless data input/output between the ECU and an external storage device, which includes the starter key of the construction equipment having a key body for being inserted into a key hole provided in the construction equipment and a key case, connected to the connection interface of the construction equipment, for being capable of performing a data communication with the ECU and storing data transmitted from the ECU; the construction equipment capable of performing a wire/wireless data communication with the starter key and transmitting construction equipment data outputted from the ECU to the starter key; and a personal computer capable of performing a wire/wireless communication with the starter key, receiving and analyzing the construction equipment data stored in the starter key, and providing a diagnosis of the ECU based on the analyzed data and maintenance information on the construction equipment using a built-in construction equipment maintenance program.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view of a maintenance system of construction equipment according to a preferred embodiment of the present invention;
FIG. 2 is a block diagram illustrating the construction of a starter key of construction equipment according to a preferred embodiment of the present invention;
FIG. 3A is a view illustrating a starter key of construction equipment according to a preferred embodiment of the present invention;
FIG. 3B is a partial perspective view of a starter key of construction equipment being fitted in the construction equipment according to a preferred embodiment of the present invention;
FIG. 4 is a view illustrating the construction of a starter key of construction equipment according to another preferred embodiment of the present invention;
FIG. 5 is a view illustrating the construction of a starter key of construction equipment according to still another preferred embodiment of the present invention;
FIG. 6A is a flowchart illustrating a process for data input/output between a starter key of construction equipment and an ECU of construction equipment according to a preferred embodiment of the present invention; and
FIG. 6B is a flowchart illustrating a process for data input/output between a starter key of construction equipment and external equipment according to a preferred embodiment of the present invention.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

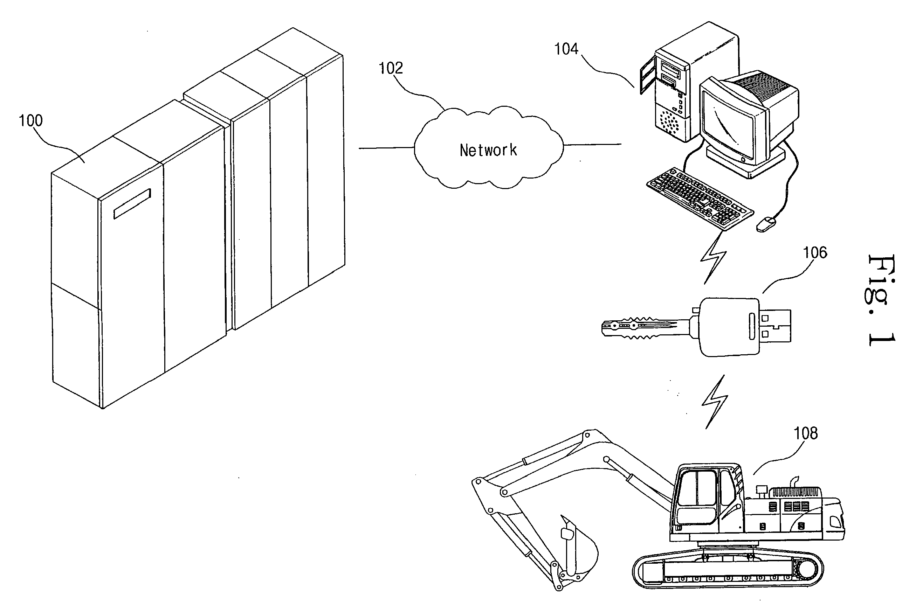

With reference to FIGs. 1, 2, and 3A and 3B, a preferred embodiment of the present invention will be explained.

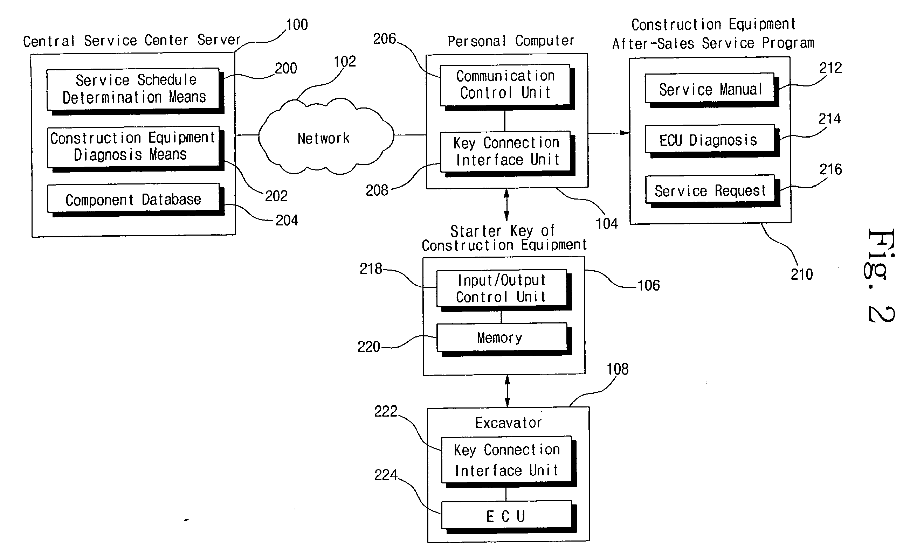

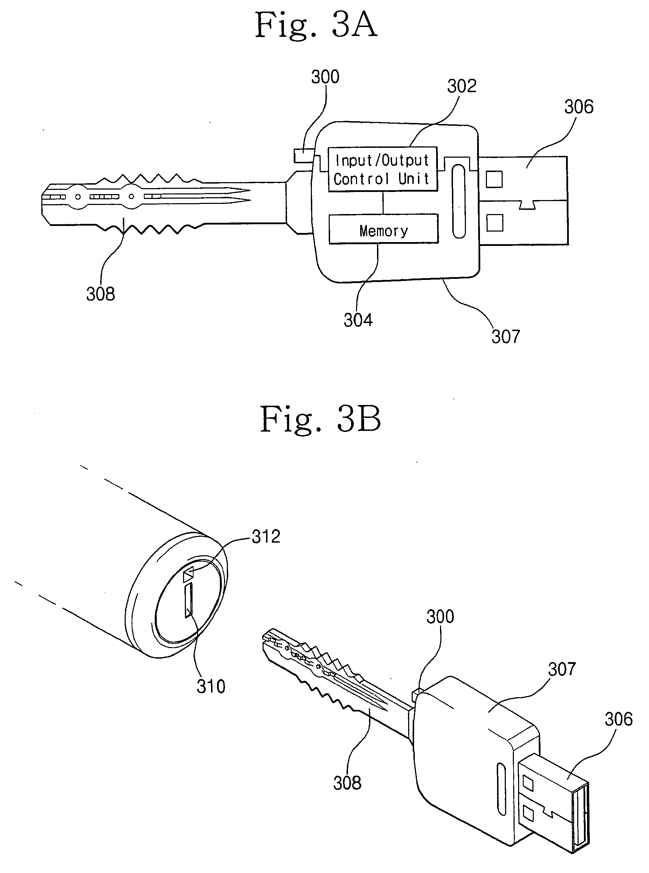

FIG. 1 is a schematic view of a maintenance system of construction equipment according to a preferred embodiment of the present invention, and FIG. 2 is a block diagram illustrating the construction of a starter key of construction equipment according to a preferred embodiment of the present invention. FIG. 3A is a view illustrating a starter key of construction equipment according to a preferred embodiment of the present invention, and FIG. 3B is a partial perspective view of a starter key of construction equipment being fitted in the construction equipment according to a preferred embodiment of the present invention.

As illustrated in FIG. 1, a maintenance system of construction equipment using a starter key of the construction equipment according to the present invention may include a central service center server 100, a personal computer 104, a starter key 106 and construction equipment 108.

The construction equipment 108 of FIG. 1, as illustrated in FIG. 2, may include an electronic control unit (ECU) 224 having a maintenance monitoring function and a connection interface 222.

The ECU 224 included in the construction equipment receives driving device information from sensors attached to respective driving devices, and controls the respective driving devices according to the received information.

It will be apparent to those skilled in the art that the ECU 224 may include a plurality of subordinate ECUs (e.g. an engine ECU for controlling an engine part, a pump ECU for controlling a main pump, a cooling ECU for controlling a cooling means, and others) and a main ECU for controlling the lower ECUs.

In the process of controlling the respective driving devices, the ECU 224 monitors all matters occurring in the construction equipment 108, such as whether the respective driving devices malfunction, whether an engine and a main pump malfunction, whether hydraulic oil overheats, and others, and stores related construction equipment data in the starter key 106 through the connection interface 222.

The connection interface 312, as illustrated in FIG. 3B, is located over a key hole 310 of a key insertion unit provided on the construction equipment. If an operator inserts the starter key 106 in the construction equipment 108, a key body 308 is inserted into the key hole 310 and simultaneously an ECU connection terminal 300 is inserted into the connection interface 312.

If the starter key 106 is inserted into the construction equipment 108 and thus the ECU connection terminal 300 of the starter key 106 is connected to the connection interface 312, the connection interface 312 confirms the communication connection with the starter key 106, and then performs a data communication with the starter key 106.

In this case, it will be apparent to those skilled in the art that a protocol for implementing data communication, such as RS232C protocol, USB protocol, and others, can be diversely constructed.

The starter key 106 can perform a data communication with the construction equipment 108 and the personal computer 104, and store data received from the construction equipment 108 and the personal computer 104.

More preferably, as illustrated in FIG. 3A, the starter key 106 may include a key case 307 that is provided with a key body 308, an ECU connection terminal 300, a PC connection terminal 306, an input/output control unit 302 and a memory 304.

As illustrated in FIGs. 3A and 3B, the ECU connection terminal 300 is installed on an upper part of the key body 308. If an operator inserts the key body 308 in the key hole 310, the ECU connection terminal 300 is simultaneously inserted into the connection interface 312 located over the key hole 310.

The input/output control unit 302 checks the communication with the connection interface 222 through the ECU connection terminal 300, and controls the data input/output between the starter key 106 and the construction equipment 108. Also, the construction equipment information received from the construction equipment 108 is stored in the memory 304 under the control of the input/output control unit 302.

If the operation of the construction equipment is completed, the operator stops the operation of the construction equipment 108 and separates the starter key 106 from the construction equipment 108.

At this time, if the operator desires to store the construction equipment data stored in the starter key 106 in the personal computer 104, or to diagnose whether the construction equipment 108 is in an abnormal state, the operator connects the starter key 106 to the personal computer 104 by inserting the PC connection terminal 306 of the starter key in the connection interface 208 of the personal computer 104.

The input/output control unit 302 checks the communication with the personal computer 104 through the PC connection terminal 306, and controls the data input/output between the starter key 106 and the personal computer 104. Also, the information received from the personal computer 104 is stored in the memory 220 under the control of the input/output control unit 218.

In this case, if the PC connection terminal 306 is prepared according to the protocol and port standard supported by the personal computer, such as the USB protocol, it can be directly inserted into the corresponding port of the personal computer without the necessity of a separate connection cable, thereby providing convenience in use.

The personal computer 104 of FIG. 1, as illustrated in FIG. 2, may include a connection interface 208 and a communication control unit 206.

The connection interface 208 serves as a data input/output path between the personal computer 104 and the starter key 106 when the starter key 106 is inserted therein.

The communication control unit 206 controls the data communication between the personal computer 104 and the central service center server 100 connected to the personal computer 104 through a network 102.

In addition, as illustrated in FIG. 2, a construction equipment after-sales service program 210 may be installed and operated in the personal computer. The construction equipment after-sales service program 210 installed in the personal computer is divided into a service manual providing menu 212, and ECU diagnosis menu 214 and a service request menu 216 to be displayed on a monitor of the personal computer.

The service manual providing menu 212 serves to analyze the construction equipment data stored in the starter key and to provide the operator with a service manual that corresponds to the result of analysis, so that the operator can make simple repairs or take a temporary expedient for himself.

The ECU diagnosis menu 214 serves to receive the ECU data and construction equipment data stored in the starter key 106 through the connection interface 208, to diagnose the status of the construction equipment, and to inform the operator of a proper countermeasure.

If a service by an expert repair man is necessary as the result of diagnosis, the service request menu 216 is automatically executed to request a service to the central service center server 100 through the network 102.

If the operator executes the service request menu 216, the personal computer 104 transmits the construction equipment data, diagnosis information and service request information to the central service center server 100 through the network 102, receives the result of construction equipment diagnosis and plural service schedules from the central service center server 100, and displays the received diagnosis result and service schedules on the monitor.

If the operator confirms plural service schedules displayed on the monitor and selects a desired service schedule, the personal computer 104 transmits the service schedule selected by the operator to the central service center server 100 to confirm the service schedule.

The central service center server 100 is connected to the personal computer 104 through the network 102, and diagnoses the status of the construction equipment 108 by receiving the construction equipment data stored in the starter key 106 through the personal computer 104. If the owner of the construction equipment 108 requests the service through the personal computer 104, the central service center server 100 determines the service schedule of the corresponding construction equipment.

As illustrated in FIG. 2, the central service center server 100 may include a service schedule determination means 200, a construction equipment diagnosis means 202, and a component database 204.

In the component database 204, the status of stock and the scheduled date of warehousing of components are stored in real time.

The construction equipment diagnosis means 202 compares the construction equipment data received from the personal computer 104 with the existing maintenance cases based on the diagnosis information, and presents an accurate diagnosis result and a proper service method.

If a service request is received from the personal computer 104, the service schedule determination means 200 transmits a plurality of possible service schedules to the personal computer 104 with reference to the diagnosis result from the construction equipment diagnosis means 202, the status of stock from the component database 204, and a service man's service schedule stored therein.

If the operator selects one among the plurality of service schedules displayed on the monitor of the personal computer, the personal computer 104 transmits the selected service schedule to the central service center server 100, so that the central service center server 100 confirms the service schedule.

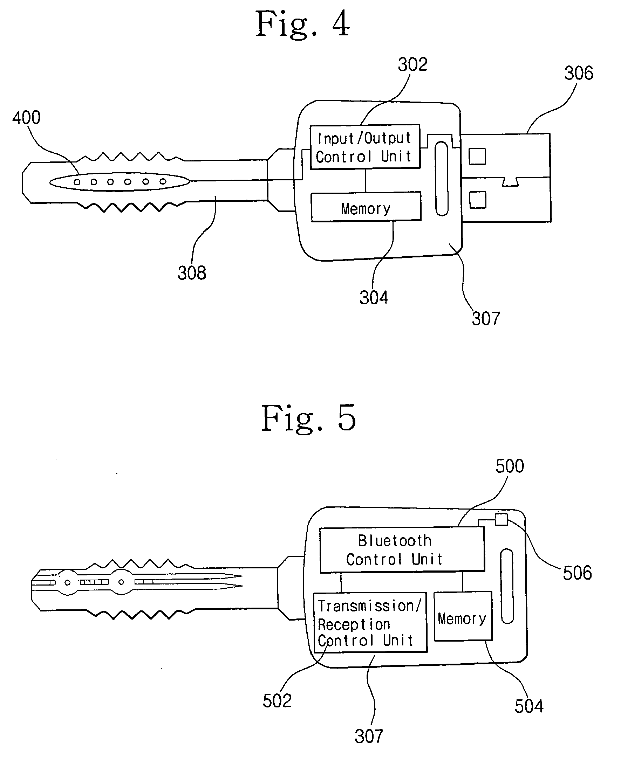

FIG. 4 is a view illustrating the construction of a starter key of construction equipment according to another preferred embodiment of the present invention.

As illustrated in FIG. 4, the starter key according to another preferred embodiment of the present invention may include a key case 307 that is provided with a key body 308 having a contact part 400 for an ECU connection, an input/output control unit 302, a memory 304, and a PC connection terminal 306.

Although the starter key as illustrated in FIGs. 3A and 3B has the ECU connection terminal 300 located on the key case 307, the starter key as illustrated in FIG. 4 has the contact part 400 for the ECU connection that is located on the key body 308 to be connected to the connection interface 222 of the construction equipment.

Accordingly, in this embodiment, the connection interface 222 of the construction equipment should be provided inside the key hole 310 of the construction equipment.

FIG. 5 is a view illustrating the construction of a starter key of construction equipment according to still another preferred embodiment of the present invention.

As illustrated in FIG. 5, the starter key according to still another preferred embodiment of the present invention may include a Bluetooth control unit 500, a transmission/reception control unit 502, a memory 504, and a power supply unit 506.

In this embodiment, a short-distance wireless communication is performed among the starter key 106, the construction equipment 108 and the personal computer 104 using Bluetooth.

The Bluetooth control unit 500 receives the power from the power supply unit 506, and controls the transmission/reception control unit 502 and the memory 504.

In this case, the starter is constructed so that the power supply unit 506 can be charged through the key body 308 that is inserted into the construction equipment 108.

The transmission/reception control unit 502 controls the wireless data transmission/reception among the memory 504, the construction equipment 108, and the personal computer 104 under the control of the Bluetooth control unit 500.

A Bluetooth antenna is included in the transmission/reception control unit 502, and the Bluetooth control unit 500, the transmission/reception control unit 502, and the memory 504 may be fabricated into one chip.

As described above, in the case where the starter key 106 is constructed to perform the wireless communication, the construction equipment 108 and the personal computer 104 should also be constructed to support the corresponding wireless communication protocol.

Accordingly, in constructing the present invention so that the wireless communication is performed using the Bluetooth protocol, it will be apparent that the Bluetooth control unit and a Bluetooth transmission/reception unit should be provided in the construction equipment 108 and the personal computer 104.

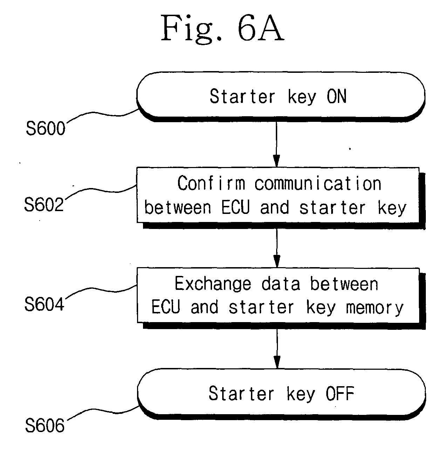

FIG. 6A is a flowchart illustrating a process for data input/output between a starter key of construction equipment and an ECU of construction equipment according to a preferred embodiment of the present invention.

The data input/output process between the starter key and the ECU of the construction equipment according to the present invention will now be explained in detail with reference to FIG. 6A.

If the operator inserts the starter key 106 in the construction equipment 108 and starts the construction equipment (S600), the input/output control unit 218 of the starter key confirms the communication state of the starter key with the ECU 224 of the construction equipment (S602).

If there is no problem in performing a communication between the starter key 106 and the ECU 224, the input/output control unit 218 of the starter key starts the data communication between the ECU 224 and the memory 220 in the starter key through the connection interface 222. If the construction equipment is in an abnormal state, the input/output control unit 218 stores the data in the memory 220 (5604) .

This data communication process continues until the construction equipment 108 stops its operation.

If the operator stops the operation of the construction equipment 108 and separate the starter key 106 from the construction equipment 108, the data communication between the starter key 106 and the construction equipment 108 is terminated (S606).

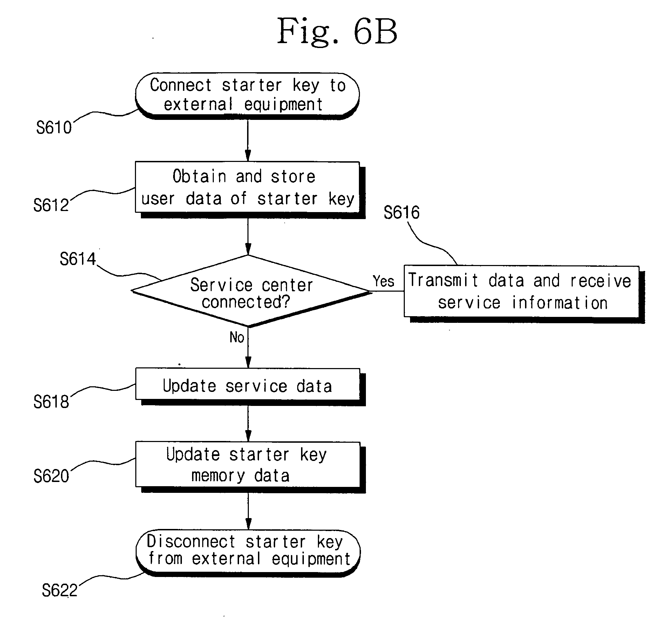

FIG. 6B is a flowchart illustrating a process for data input/output between a starter key of construction equipment and external equipment according to a preferred embodiment of the present invention.

The data input/output process between the starter key of construction equipment and the external equipment such as the personal computer according to the present invention will now be explained in detail with reference to FIG. 6A.

If the operator stops the operation of the construction equipment 108 and connects the starter key 106 of the construction equipment to the external equipment such as the personal computer 104 (S610), the input/output control unit 218 of the starter key transmits the construction equipment data stored in the memory 220 to the personal computer 104 through the connection interface 208 (S612).

The external equipment such as the personal computer 104 analyzes the construction equipment data received from the starter key 106, outputs construction equipment service information to the operator, and judges whether a request for a connection to the service center is received (S614).

If the request for the connection to the service center is received as a result of judgment, the personal computer transmits the construction equipment data to the service center server 100 connected through the network 102, and receives the service information (5616).

If the request for the connection to the service center is not received as a result of judgment, the personal computer 104 updates and stores the construction equipment service information judged on the basis of the construction equipment data stored in the starter key 106 (S618), and transmits new data to the starter key 106 to store the new data in the memory 220 of the starter key (S620).

If the operator separates the starter key 106 from the personal computer 104, the data input/output process between the starter key 106 and the external equipment is terminated (S622).

As described above, according to the starter key of the construction equipment and the maintenance system of the construction equipment using the starter key according to the present invention, the data of the construction equipment is stored in the starter key, and then is transmitted to the personal computer, so that the status of the construction equipment can be diagnosed easily.

Also, according to the present invention, an accurate diagnosis is possible by transmitting the construction equipment data to the central service center server through the network connected to the personal computer.

Also, according to the present invention, since the operator can request a service to the central service center server through the network if needed, a smooth and efficient construction equipment maintenance work can be done even in a remote place where it is difficult to perform a wireless communication.

Also, according to the present invention, since a service man in the central service center can recognize in advance the status of the equipment and the trouble diagnosis status on the basis of the construction equipment data transmitted to the central service center server, prepare the corresponding service method and components, and perform the maintenance work at the time appointed with the owner of the construction equipment, the efficiency of the construction equipment maintenance can be maximized.

The present application contains subject matter related to Korean paten application no. 2005-15021, filed in the Korean Patent Office on February 23, 2005, the entire contents of which being incorporated herein by reference.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A starter key of construction equipment for use in the construction equipment provided with an electronic control unit (ECU) having a maintenance monitoring function and a connection interface for a wire/wireless data input/output between the ECU and an external storage device, the starter key comprising:
a key body for being inserted into a key hole provided in the construction equipment; and
a key case, connected to the connection interface of the construction equipment, for being capable of performing a data communication with the ECU and storing data transmitted from the ECU.

2. The starter key as claimed in claim 1, wherein the key case comprises:
an ECU connection terminal, located outside the key case, for being inserted in the connection interface of the construction equipment;
a personal computer (PC) connection terminal, located outside the key case, for being inserted into an input/output terminal of a personal computer;
an input/output control unit for controlling a data input/output through the ECU connection terminal and the PC connection terminal; and
a memory for storing data transmitted through the ECU connection terminal and the PC connection terminal under the control of the input/output control unit.

3. The starter key as claimed in claim 1, wherein the key body comprises a contact part for an ECU connection connected to the connection interface of the construction equipment; and
wherein the key case comprises:
a personal computer (PC) connection terminal, located outside the key case, for being inserted into an input/output terminal of a personal computer;
an input/output control unit for controlling a data input/output through the contact part for the ECU connection and the PC connection terminal; and
a memory for storing the data transmitted through the ECU connection terminal and the PC connection terminal under the control of the input/output control unit.

4. The starter key as claimed in claim 1, wherein the key case comprises:
a Bluetooth control unit, located inside the key case, for controlling a wireless data communication between the connection interface of the construction equipment and a wireless data interface of a personal computer;
a power supply unit for supplying power to the Bluetooth control unit;
a transmission/reception control unit for controlling a wireless data transmission/reception among the ECU, the personal computer, and the starter key; and
a memory for storing the data transmitted through the transmission/reception control unit under the control of the Bluetooth control unit.

5. A maintenance system of construction equipment using a starter key of the construction equipment for use in the construction equipment provided with an electronic control unit (ECU) having a maintenance monitoring function and a connection interface for a wire/wireless data input/output between the ECU and an external storage device, the maintenance system comprising:
the starter key of the construction equipment having a wire/wireless data communication means, and capable of performing a data storage and a data input/output;
the construction equipment capable of performing a wire/wireless data communication with the starter key and transmitting construction equipment data outputted from the ECU to the starter key; and
a personal computer capable of performing a wire/wireless communication with the starter key, receiving and analyzing the construction equipment data stored in the starter key, and providing a diagnosis of the ECU based on the analyzed data and maintenance information on the construction equipment using a built-in construction equipment maintenance program.

6. The maintenance system as claimed in claim 5, further comprising a central service center server, connected to the personal computer through a network, for analyzing the construction equipment data received from the personal computer, diagnosis information of the ECU, and the maintenance information of the construction equipment, and transmitting necessary maintenance information to the personal computer to make the personal computer store the maintenance information in the starter key.

7. The maintenance system as claimed in claim 6, wherein the personal computer comprises a service request means capable of requesting a service to the central service center server; and
wherein the central service center server comprises:
a component database for storing a status of stock and a scheduled date of warehousing/delivery of components of the construction equipment; and
a service schedule determining means for receiving a service request from the personal computer, referring to the component database, and transmitting a service schedule according to the status of the component to the personal computer.
